# FASCICULE DE BREVET EUROPEEN

(11) **EP 1 709 312 B1**
(45) Date de publication et mention de la délivrance du brevet: **14.09.2011**
(21) Numéro de dépôt: 04817102.9
(22) Date de dépôt: 28.09.2004
(51) Int. Cl.: F02D 41/00, F02D 41/36, F02D 13/02

(54) **PROCEDE DE COMMANDE DES SOUPAPES D'ADMISSION D'UN MOTEUR A COMBUSTION INTERNE**
VERFAHREN ZUR STEUERUNG DER EINLASSVENTILE EINES VERBRENNUNGSMOTORS
METHOD FOR CONTROLLING THE INTAKE VALVES OF AN INTERNAL COMBUSTION ENGINE

(30) Priorité: 30.09.2003 FR 0311447
(43) Date de publication de la demande: 11.10.2006
(73) Titulaire: Peugeot Citroën Automobiles S.A., 78140 Vélizy Villacoublay (FR)
(72) Inventeur: MORIN, Cédric, F-45700 Villemandeur (FR)
(74) Mandataire: Ménès, Catherine
(86) Numéro de dépôt international: PCT/FR2004/050466
(87) Numéro de publication internationale: WO 2005/033495

(56) Documents cités:
- EP-A- 0 594 462
- EP-A- 1 130 240

## Description

La présente invention concerne un procédé de commande des soupapes d'admission d'un moteur à combustion interne comportant un système piloté d'injection indirecte en carburant et comprenant au moins deux soupapes d'admission par cylindre commandées indépendamment l'une de l'autre. Elle concerne également un système de mise en oeuvre de ce procédé.

Elle s'applique en particulier à un moteur à essence de véhicule automobile.

Sur les moteurs comportant un système piloté d'injection indirecte en carburant, il est connu que, lorsque le conducteur lève le pied de l'accélérateur, le système de pilotage de l'injection de carburant coupe l'alimentation en carburant des conduits d'admission et donc des cylindres du moteur. De ce fait, le moteur ne produit plus de couple ce qui entraîne un ralentissement du véhicule. Cette configuration de freinage appelée « frein moteur » évite de consommer inutilement du carburant.

De même, il est connu que lorsque le moteur dépasse un régime maximum autorisé, le système de pilotage de l'injection de carburant coupe l'alimentation en carburant afin que le moteur ne produise plus de couple et que le régime redescende en dessous du seuil maximum autorisé. Le système assure ainsi la protection du moteur.

Enfin, il est admis que, pendant ces phases de coupure de l'alimentation en carburant, que ce soit dans le cas du frein moteur ou bien dans le cas du dépassement du régime maximum autorisé, le moteur puisse rester alimenté en air par le système d'admission. En reflet, les volumes d'air admis dans les cylindres, traversent la ligne d'échappement et participent au refroidissement du convertisseur catalytique, pour lequel des températures trop élevées sont néfastes à sa tenue dans le temps.

Or, au début de ces phases de coupure d'injection de carburant, une petite quantité de carburant qui était déposée sur les parois des conduits d'admission, est aspirée avec l'air dans les cylindres. Compte tenu de sa faible concentration dans l'air aspiré, cette quantité d'essence résiduelle ne peut être brûlée dans la chambre de combustion des cylindres et est rejetée dans l'échappement lors de la phase d'expulsion des gaz des cylindres.

De ce fait, les hydrocarbures imbrûlés constituent, en sortie du moteur, des émissions polluantes brutes importantes comparativement aux émissions constatées lorsque la combustion a lieu. La présence de ces hydrocarbures imbrûlés dans la ligne d'échappement pose deux types de problèmes.

D'une part, lorsque le convertisseur catalytique n'est pas amorcé ou partiellement amorcé ou endommagé, ces hydrocarbures imbrûlés ne sont que partiellement oxydés voire ne sont pas oxydés dans le convertisseur catalytique et une partie d'entre eux se retrouve dans l'atmosphère, à la sortie de la ligne d'échappement.

D'autre part, lorsque le convertisseur catalytique est amorcé, et ceci dès lors qu'il a atteint une température supérieure à 400°C, il contribue à oxyder, suivant une réaction exothermique, les hydrocarbures grâce à l'oxygène présent dans la ligne d'échappement. Cependant, lorsque le convertisseur catalytique est à une température supérieure à 900°C, cette réaction exothermique provoque une élévation de température supplémentaire qui peut entraîner un endommagement partiel du convertisseur catalytique. Cette situation, qui correspond à une forte accélération suivie d'un relâchement de la pédale de l'accélérateur pour passer en frein moteur ou bien à un dépassement du régime maximum autorisé consécutif à une forte accélération, pouvant être rencontrée assez fréquemment, il s'en suit une détérioration progressive du convertisseur catalytique qui ne respecte alors plus les spécifications en terme de durée de vie et de maintien des performances.

Ainsi, les coupures de l'alimentation en carburant ont des conséquences qui vont à l'encontre du respect des normes environnementales, à savoir :
- l'émission supplémentaires d'hydrocarbures, émissions polluantes brutes, lorsque le convertisseur catalytique n'est pas totalement amorcé ou est endommagé.
- une dégradation du convertisseur catalytique qui conduit progressivement à un dysfonctionnement de celui-ci, lorsque le convertisseur catalytique est amorcé.

La solution généralement envisagée, pour les moteurs à injection indirecte d'essence, consiste à interdire les coupures d'injection de carburant dans le cas où le convertisseur catalytique n'est pas amorcé, c'est à dire lors du démarrage à froid du véhicule. Ceci permet de maintenir la combustion du mélange air/carburant dans les cylindres et d'éviter l'émission d'hydrocarbures en sortie des cylindres. Toutefois, il n'est pas souhaitable de généraliser cette interdiction en dehors de ce cas, puisque, d'une part, la consommation du véhicule se trouverait alors sensiblement augmentée et d'autre part le fonctionnement du moteur se trouverait fortement altéré.

EP-A-0594462 décrit un procédé de commande d'ouverture et de fermeture des soupapes d'admission d'un moteur à combustion interne comportant un système d'injection indirecte en carburant, comprenant au moins une première soupape d'admission et une deuxième soupape d'admission par cylindre, chaque soupape permettent d'obturer ou d'ouvrir respectivement an premier et un deuxième conduits d'admission du cylindre et étant commandées indépendamment de l'autre soupape, au moins l'un des conduits étant alimenté en carburant et au moins l'un des autres conduits n'étant pas alimenté en carburant. L'injection de carburant semble synchronisée sur les périodes d'ouverture des soupapes.

L'invention a donc pour but de permettre la coupure de l'injection à chaque fois que le conducteur lève le pied de l'accélérateur et à chaque fois que le moteur dépasse un régime maximum autorisé, sans que cette coupure d'injection ne présente les inconvénients précités, à savoir notamment une émission supplémentaire d'hydrocarbures dans l'atmosphère ou un endommagement du convertisseur catalytique.

Plus précisément, l'invention concerne un procédé de commande d'ouverture et de fermeture des soupapes d'admission d'un moteur à combustion interne comportant un système d'injection indirecte en carburant, comprenant au moins une première soupape d'admission et une deuxième soupape d'admission par cylindre, chaque soupape permettant d'obturer ou d'ouvrir respectivement un premier et un

deuxième conduits d'admission du cylindre et étant commandée indépendamment de l'autre soupape, au moins l'un des conduits étant alimenté en carburant et au moins l'un des autres conduits n'étant pas alimenté en carburant.

Selon l'inventeur, le procédé consiste à commander la fermeture de la (ou des) soupape(s) correspondant au(x) conduit(s) d'admission alimenté(s) en carburant pendant les intervalles de temps où le système d'injection ne fonctionne pas.

L'invention concerne également un système de commande d'ouverture et de fermeture des soupapes d'admission d'un moteur à combustion interne comportant un système d'injection indirecte en carburant, comprenant au moins une première soupape d'admission et une deuxième soupape d'admission par cylindre, chaque soupape étant commandée indépendamment de l'autre soupape par un dispositif d'actionnement pour obturer ou ouvrir respectivement un premier et un deuxième conduits d'admission du cylindre, au moins l'un des conduits étant muni d'un dispositif d'injection de carburant piloté et au moins l'un des autres conduits n'étant pas muni d'un dispositif d'injection de carburant, et comprenant des moyens de commande du dispositif d'injection de carburant caractérisé en ce qu'il comporte une unité centrale permettant de commander les dispositifs d'actionnement de façon à fermer la (ou les) soupapes correspondant au(x) conduit(s) d'admission muni(s) d'un dispositif d'injection de carburant pendant les intervalles de temps où les moyens de commande du dispositif d'injection de carburant coupent le fonctionnement de celui-ci.

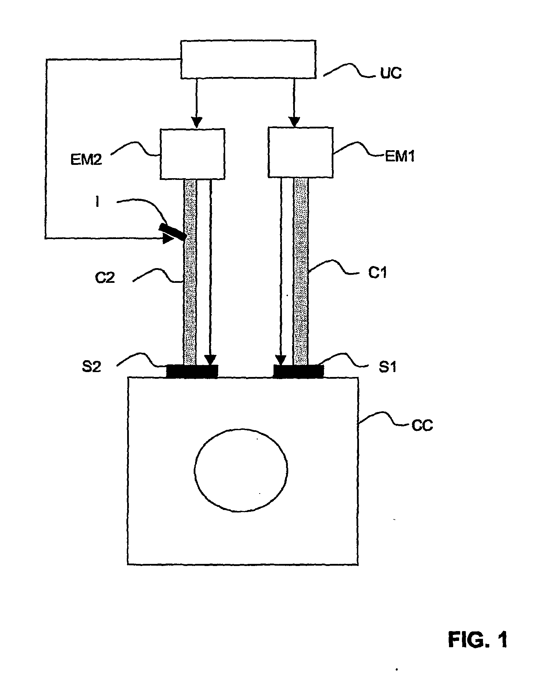

L'invention sera mieux comprise à l'aide du mode de réalisation représenté sur la figure 1 et donné à titre d'exemple.

On a représenté sur la figure 1 un cylindre CC d'un moteur à combustion interne, une première soupape d'admission S1 et une deuxième soupape d'admission S2, chaque soupape étant commandée indépendamment de l'autre soupape par un dispositif d'actionnement EM1, EM2 pour obturer ou ouvrir respectivement un premier et un deuxième conduits d'admission C1, C2 du cylindre CC. Le conduit C2 est muni d'un dispositif d'injection de carburant piloté 1 alors que le conduit C1 est séparé du conduit C2 et n'est pas alimenté en carburant. Une unité centrale de commande UC permet de commander, d'une part le dispositif d'injection de carburant piloté 1 et d'autre part les dispositifs d'actionnement EM1, EM2 des soupapes S1, S2 de façon à commander l'ouverture ou la fermeture des soupapes S1, S2 indépendamment l'une de l'autre.

Lorsque l'unité centrale UC commande au dispositif d'injection de carburant piloté I la coupure d'injection de carburant dans le conduit d'admission C2, elle envoie simultanément au dispositif d'actionnement EM2 un ordre de fermeture de la soupape S2. Ainsi, le carburant présent sur les parois du conduit C2 et l'air envoyé dans le conduit C2 ne peuvent plus arriver dans le cylindre CC. On notera que le carburant présent sur les parois des conduits d'admission est consommé dès que le dispositif d'actionnement EM2 est à nouveau activé en conjonction avec le dispositif d'injection de carburant piloté 1. Pendant les intervalles de temps de coupures d'injection, la soupape S1 est actionnée par le dispositif d'actionnement EM1, de manière à ce que le conduit C1 alimente le cylindre CC en air.

Ainsi, pendant les coupures d'injection, aucun hydrocarbure imbrûlé n'est envoyé dans la ligne d'échappement et le débit d'air en sortie du moteur est maintenu pour contribuer au refroidissement du convertisseur catalytique.

Bien sûr l'invention n'est pas limitée au mode de réalisation de la figure 1, donné uniquement à titre d'exemple.

Ainsi, chaque cylindre du moteur pourrait comporter plus de deux soupapes donc plus de deux conduits d'admission, pourvu que l'un au moins des conduits soit alimenté en carburant et que l'un au moins des autres conduits ne le soient pas.

Ces conduits peuvent être séparés les uns des autres ou être siamois.

D'autre part, les unités de commande du dispositif d'injection I et des dispositifs d'actionnement EM1, EM2 pourraient être distinctes.

## Revendications

1. Procédé de commande d'ouverture et de fermeture des soupapes d'admission d'un moteur à combustion interne comportant un système d'injection indirecte en carburant, comprenant au moins une première soupape d'admission (S1) et une deuxième soupape d'admission (S2) par cylindre (CC), chaque soupape (S1, S2) permettent d'obturer ou d'ouvrir respectivement un premier et un deuxième conduits d'admission (C1, C2) du cylindre (CC) et étant commandée indépendamment de l'autre soupape, au moins l'un des conduits (C1, C2) étant alimenté en carburant et au moins l'un des autres conduits (C1, C2) n'étant pas alimenté en carburant, **caractérisé en ce qu'**il consiste à commander la fermeture de la (ou des) soupape(s) (S1, S2) correspondant au(x) conduit(s) d'admission (C1, C2) alimenté(s) en carburant pendant les intervalles de temps où le système d'injection ne fonctionne pas.

2. Système de commande d'ouverture et de fermeture des soupapes d'admission d'un moteur à combustion interne comportant un système d'injection indirecte en carburant (1), comprenant au moins une première soupape d'admission (S1) et une deuxième soupape d'admission (S2) par cylindre (CC), chaque soupape (S1, S2) étant commandée indépendamment de l'autre soupape par un dispositif d'actionnement (EM1, EM2) pour obturer ou ouvrir respectivement un premier et un deuxième conduits d'admission (C1, C2) du cylindre (CC), au moins l'un des conduits (C1, C2) étant muni d'un dispositif d'injection de carburant piloté (1) et au moins l'un des autres conduits (C1, C2) n'étant pas muni d'un dispositif d'injection de carburant, et comprenant des moyens de commande (UC) du dispositif d'injection de carburant (1), **caractérisé en ce qu'**il comporte une unité centrale (UC) permettant de commander les dispositifs d'actionnement (EM1, EM2) de façon à fermer la (ou les) soupapes (S1, S2) correspondant au(x) conduit(s) d'admission muni(s) d'un dispositif d'injection de carburant (I) pendant les intervalles de temps où les moyens de commande (UC) du dispositif d'injection de carburant (I) coupent le fonctionnement de celui-ci.

## Claims

1. Method for controlling the opening and closing of the intake valves of an internal combustion engine comprising an indirect fuel injection system, comprising at least a first intake valve (S1) and a second intake valve (S2) per cylinder (CC), each valve (S1, S2) making it possible to close or open a first and a second intake pipe (C1, C2), respectively, of the cylinder (CC) and being controlled independently of the other valve, at least one of the pipes (C1, C2) being supplied with fuel and at least one of the other pipes (C1, C2) not being supplied with fuel, **characterised in that** it consists in controlling the closing of the valve(s) (S1, S2) corresponding to the intake pipe(s) (C1, C2) supplied with fuel during the time intervals when the injection system does not operate.

2. System for controlling the opening and closing of the intake valves of an internal combustion engine comprising an indirect fuel injection system (I), comprising at least a first intake valve (S1) and a second intake valve (S2) per cylinder (CC), each valve (S1, S2) being controlled independently of the other valve by an actuating device (EM1, EM2) for closing and opening a first and a second intake pipe (C1, C2), respectively, of the cylinder (CC), at least one of the pipes (C1, C2) being equipped with a driven fuel injection device (I) and at least one of the other pipes (C1, C2) not being equipped with a fuel injection device, and comprising means (UC) for controlling the fuel injection device (I), **characterised in that** it comprises a central unit (UC) making it possible to control the actuating devices (EM1, EM2) so as to close the valve(s) (S1, S2) corresponding to the intake pipe(s) equipped with a fuel injection device (I) during the time intervals when the means (UC) for controlling the fuel injection device (I) cut off operation thereof.

## Patentansprüche

1. Verfahren zum Ansteuern der Öffnung und Schließung der Einlassventile eines Innenverbrennungsmotors umfassend ein System zur indirekten Kraftstoffeinspritzung mit zumindest einem ersten Einlassventil (S1) und einem zweiten Einlassventil (S2) je Zylinder (CC), wobei jedes Ventil (S1, S2) das Verschließen oder Öffnen jeweils eines ersten und zweiten Einlasskanals (C1, C2) des Zylinders (CC) ermöglicht, und unabhängig von dem jeweils anderen Ventil angesteuert wird, und zumindest der eine der beiden Kanäle (C1, C2) mit Kraftstoff versorgt wird, und zumindest der eine der anderen Kanäle (C1, C2) nicht mit Kraftstoff versorgt wird, **dadurch gekennzeichnet, dass** es darin besteht, das Schließen des (oder der) Ventils (Ventile) (S1, S2) anzusteuern, das (die) dem (den) Einlasskanal (-kanälen) (C1, C2) entspricht (entsprechen), der (die) in jenen Zeitintervallen mit Kraftstoff versorgt wird (werden), in denen das Einspritzsystem nicht funktioniert.

2. System zum Ansteuern der Öffnung und Schließung der Einlassventile eines Innenverbrennungsmotors umfassend ein System zur indirekten Kraftstoffeinspritzung (I) mit zumindest einem ersten Einlassventil (S1) und einem zweiten Einlassventil (S2) je Zylinder (CC), wobei jedes Ventil (S1, S2) unabhängig vom anderen Ventil von einer Betätigungsvorrichtung (EM1, EM2) zum Verschließen oder Öffnen jeweils eines ersten und eines zweiten Einlasskanals (C1, C2) des Zylinders (CC) angesteuert wird, wobei zumindest einer der Kanäle (C1, C2) mit einer gesteuerten Kraftstoff-Einspritzvorrichtung (I) ausgestattet ist, und zumindest einer der anderen Einlasskanäle (C1, C2) nicht mit einer Kraftstoff-Einspritzvorrichtung ausgestattet ist, und umfassend Vorrichtungen zur Steuerung (UC) der Kraftstoff-Einspritzvorrichtung (I), **dadurch gekennzeichnet, dass** es eine Zentraleinheit (UC) umfasst, mit der die Betätigungsvorrichtungen (EM1, EM2) angesteuert werden können, sodass das (oder die) Ventil(e) (S1, S2) geschlossen wird (werden), das (die) dem (den) Einlasskanal (-kanälen) (C1, C2) entspricht (entsprechen), der (die) in den Zeitintervallen mit einer Kraftstoff-Einspritzvorrichtung (I) ausgestattet ist (sind), in denen die Vorrichtungen zur Steuerung (UC) der Kraftstoff-Einspritzvorrichtung (I) den Betrieb derselben unterbrechen.
